# EUROPEAN PATENT SPECIFICATION

(11) **EP 3 609 232 B1**
(45) Date of publication and mention of the grant of the patent: **16.02.2022**
(21) Application number: 19183565.1
(22) Date of filing: 01.07.2019
(51) Int. Cl.: H04W 36/00

(54) **HANDOVER MANAGEMENT**
HANDOVER-VERWALTUNG
GESTION DE TRANSFERT

(30) Priority: 09.08.2018 US 201862716406 P
(43) Date of publication of application: 12.02.2020
(73) Proprietor: Nokia Technologies Oy, 02610 Espoo (FI)
(72) Inventor: AWADA, Ahmad, 81249 Munich (DE); VIERING, Ingo, 81549 Munich (DE); STANCZAK, Jedrzej, 54107 Wroclaw (PL)
(74) Representative: Nokia EPO representatives

(56) References cited:
- WO-A1-2018/127264
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 15)", 3GPP STANDARD; TECHNICAL SPECIFICATION; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.2.0, 7 July 2018 (2018-07-07), pages 1-357, XP051474841, [retrieved on 2018-07-07]
- LG ELECTRONICS INC: "Support of DC based handover with conditional handover for 0ms interruption", 3GPP DRAFT; R2-1802541 SUPPORT OF DC BASED HANDOVER WITH CONDITIONAL HANDOVER FOR 0MS INTERRUPTION, 3RD GENERATION PARTNERSHIP PROJECT (3GPP), MOBILE COMPETENCE CENTRE ; 650, ROUTE DES LUCIOLES ; F-06 , vol. RAN WG2, no. Athens, Greece; 20180226 - 20180302 14 February 2018 (2018-02-14), XP051399252, Retrieved from the Internet: URL:http://www.3gpp.org/ftp/tsg%5Fran/WG2% 5FRL2/TSGR2%5F101/Docs/ [retrieved on 2018-02-14]
- NOKIA ET AL: "RACH-less HO in beam-based system", 3GPP DRAFT; R2-1909286_RACH-LESS HO IN BEAM-BASED SYSTEM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czechia; 20190826 - 20190830 15 August 2019 (2019-08-15), XP051767088, Retrieved from the Internet: URL:http://www.3gpp.org/ftp/tsg_ran/WG2_RL 2/TSGR2_107/Docs/R2-1909286.zip [retrieved on 2019-08-15]

## Description

### FIELD

The present disclosure relates to managing handovers in wireless communication systems.

### BACKGROUND

A handover, or handoff, refers to the process of transferring an ongoing connection or session from one channel to another channel. The channels may relate to different cells, different base stations or even different radio access technologies. The case where a handover is to another radio access technology, RAT, may be referred to as an inter-RAT handover.

A handover may be necessitated by movement of a terminal, for example, in case the terminal leaves the coverage area of one cell and enters the coverage area of another cell. Alternatively, a handover may be necessitated by a terminal requiring service which the current channel cannot offer, such as, for example, a circuit-switched connection or a high-data rate connection.

WO2018127264A1 discusses a random-access procedure by using either contention free or contention based preambles.

### SUMMARY OF THE INVENTION

The invention is defined in the independent claims. Embodiments of the invention are defined in the dependent claims. The embodiments that do not fall under the scope of the claims are to be interpreted as examples useful for understanding the disclosure.

According to a first aspect useful for understanding the present invention, there is provided an apparatus comprising at least one processing core, at least one memory including computer program code, the at least one memory and the computer program code being configured to, with the at least one processing core, cause the apparatus at least to receive, from a target cell via a source cell, information concerning at least one beam of the target cell, the at least one beam being at least one candidate beam for random access free handover, determine that none of the at least one beam is usable for the random access free handover, and exactly one of establish a connection to the target cell using a backup resource, and initiate a radio link recovery process.

According to a second aspect useful for understanding the present invention, there is provided a method comprising receiving, in an apparatus, from a target cell via a source cell, information concerning at least one beam of the target cell, the at least one beam being at least one candidate beam for random access free handover, determining that none of the at least one beam is usable for the random access free handover, and exactly one of establishing a connection to the target cell using a backup resource, and initiating a radio link recovery process.

According to a third aspect useful for understanding the present invention, there is provided an apparatus comprising at least one processing core, at least one memory including computer program code, the at least one memory and the computer program code being configured to, with the at least one processing core, cause the apparatus at least to receive from a source cell a list identifying at least one beam which has been detected by a user equipment, the at least one beam being of a cell controlled by the apparatus, provide to the source cell information relating to at least one beam from the list for random access free handover of the user equipment to the cell controlled by the apparatus, and provide to the source cell information concerning backup resources to be used by the user equipment to establish a connection with the apparatus in case none of the at least one beam from the list is usable in the random access free handover of the user equipment to the cell controlled by the apparatus.

According to a fourth aspect useful for understanding the present invention, there is provided a method, comprising receiving from a source cell a list identifying at least one beam which has been detected by a user equipment, the at least one beam being of a cell controlled by an apparatus performing the method, providing to the source cell information relating to at least one beam from the list for random access free handover of the user equipment to the cell controlled by the apparatus, and providing to the source cell information concerning backup resources to be used by the user equipment to establish a connection with the apparatus in case none of the at least one beam from the list is usable in the random access free handover of the user equipment to the cell controlled by the apparatus.

According to a fifth aspect useful for understanding the present invention, there is provided an apparatus comprising means for receiving, in an apparatus, from target cell via a source cell, information concerning at least one beam of the target cell, the at least one beam being at least one candidate beam for random access free handover, determining that none of the at least one beam is usable for the random access free handover, and exactly one of establishing a connection to the target cell using a backup resource, and initiating a radio link recovery process.

According to a sixth aspect useful for understanding the present invention, there is provided an apparatus comprising means for receiving from a source cell a list identifying at least one beam which has been detected by a user equipment, the at least one beam being of a cell controlled by an apparatus performing the method, providing to the source cell information relating to at least one beam from the list for random access free handover of the user equipment to the cell controlled by the apparatus, and providing to the source cell information concerning backup resources to be used by the user equipment to establish a connection with the apparatus in case none of the at least one beam from the list is usable in the random access free handover of the user equipment to the cell controlled by the apparatus.

According to a seventh aspect useful for understanding the present invention, there is provided a non-transitory computer readable medium having stored thereon a set of computer readable instructions that, when executed by at least one processor, cause an apparatus to at least receive, from a target cell via a source cell, information concerning at least one beam of the target cell, the at least one beam being at least one candidate beam for random access free handover, determine that none of the at least one beam is usable for the random access free handover, and exactly one of establish a connection to the target cell using a backup resource, and initiate a radio link recovery process.

According to an eighth aspect useful for understanding the present invention, there is provided a non-transitory computer readable medium having stored thereon a set of computer readable instructions that, when executed by at least one processor, cause an apparatus to at least receive from a source cell a list identifying at least one beam which has been detected by a user equipment, the at least one beam being of a cell controlled by the apparatus, provide to the source cell information relating to at least one beam from the list for random access free handover of the user equipment to the cell controlled by the apparatus, and provide to the source cell information concerning backup resources to be used by the user equipment to establish a connection with the apparatus in case none of the at least one beam from the list is usable in the random access free handover of the user equipment to the cell controlled by the apparatus.

According to a ninth aspect useful for understanding the present invention, there is provided a computer program configured to cause the following to be performed, when executed by a computer: receiving, in an apparatus, from a source cell information concerning at least one beam of a target cell, the at least one beam being at least one candidate beam for random access free handover, determining that none of the at least one beam is usable for the random access free handover, and exactly one of establishing a connection to the target cell using a backup resource, and initiating a radio link recovery process.

According to a tenth aspect useful for understanding the present invention, there is provided a computer program configured to cause the following to be performed, when executed by a computer: receiving from a source cell a list identifying at least one beam which has been detected by a user equipment, the at least one beam being of a cell controlled by an apparatus performing the method, providing to the source cell information relating to at least one beam from the list for random access free handover of the user equipment to the cell controlled by the apparatus, and providing to the source cell information concerning backup resources to be used by the user equipment to establish a connection with the apparatus in case none of the at least one beam from the list is usable in the random access free handover of the user equipment to the cell controlled by the apparatus.

### BRIEF DESCRIPTION OF THE DRAWINGS

FIGURE 1 illustrates an example system in accordance with at least some embodiments of the present invention;
FIGURE 2 illustrates an example apparatus capable of supporting at least some embodiments of the present invention
FIGURE 3 illustrates signalling in accordance with at least some embodiments of the present invention;
FIGURE 4 illustrates signalling in accordance with at least some embodiments of the present invention;
FIGURE 5 is a flow graph of a method in accordance with an aspect useful for understanding the present invention.
FIGURE 6 is a flow graph of a method in accordance with an aspect useful for understanding the present invention.

### EMBODIMENTS

The dependability of random access free handovers may be enhanced by the procedures described herein. In detail, where no candidate beamforming beam turns out to be suitable for completing a random access free handover, either a backup resource may be used to establish a connection to the target cell, or a radio link recovery process may be initiated without waiting for timer expiry. Using backup resources may comprise a random access procedure on random access resources, or transmitting a handover message using grant-free uplink contention-based resources.

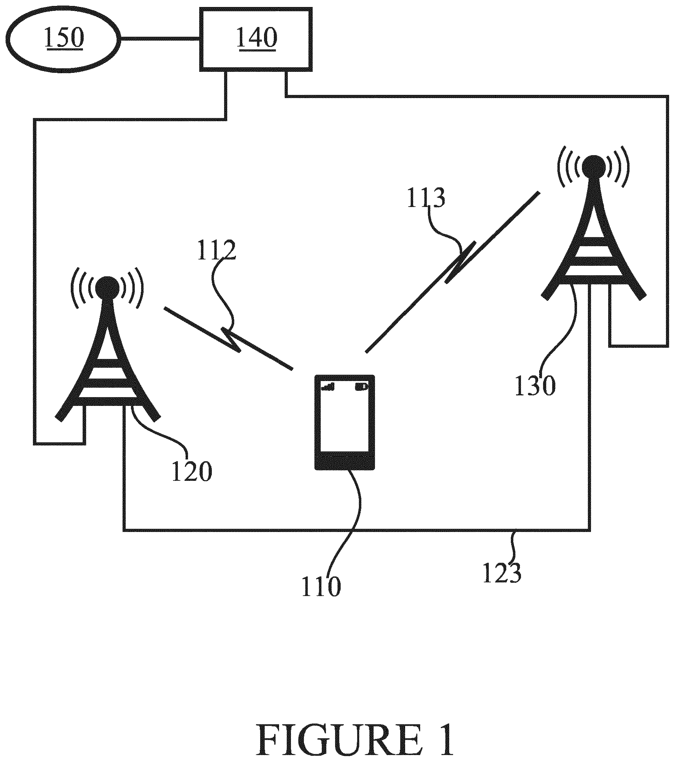

FIGURE 1 illustrates an example system in accordance with at least some embodiments of the present invention. User equipment, UE, 110 may comprise, for example, a smartphone, a cellular phone, a machine-to-machine, M2M, node, an Internet of Things, IoT, node, a car telemetry unit, a laptop computer, a tablet computer or, indeed, another kind of suitable user device. UE 110 is in FIGURE 1 attached to a cell of base station 120. An air interface between UE 110 and base station 120 is configured in accordance with a radio access technology, RAT, which both UE 110 and base station 120 are configured to support. Examples of cellular RATs include long term evolution, LTE, and new radio, NR, which is also known as fifth generation, 5G. On the other hand, examples of non-cellular RATs include wireless local area network, WLAN, and worldwide interoperability for microwave access, WiMAX. Principles of the present disclosure are not limited to a specific RAT.

Base station 120 is connected, directly or via at least one intermediate node, with core network 140. Core network 140 is, in turn, coupled with network 150, via which connectivity to further networks may be obtained, for example via a worldwide interconnection network. Base station 120 may be connected with base station 130 via inter-base station interface 123. In some embodiments, inter-base station interface 123 is absent. Base station 130 may be connected, directly or via at least one intermediate node, with core network 140 or with another core network.

In the following, a handover process will be described primarily with reference to a handover from a cell controlled by base station 120 and a wireless link 112 to a cell controlled by base station 130 and a wireless link 113, but in general principles described herein are equally applicable to a handover from a first cell of base station 120 to a second cell of base station 120. In general, a handover is from a source cell to a target cell. An individual base station may control more than one cell.

The base stations may exchange information via inter-base station interface 123, where this interface is present. Where inter-base station interface 123 is absent, the base stations may exchange information via core network 140, for example. Where the base stations are connected with different core networks, the base stations may exchange information with each other via the respective core networks and an interconnection between the core networks.

In a conventional handover, a UE will form a connection to the target cell using a random access process which comprises the UE transmitting a physical random access, PRACH, preamble and receiving a random access, RACH, response in return from the target cell. The UE may then transmit to the target cell a handover message, such as a handover complete message, such as a connection reconfiguration complete message, for example a radio resource control, RRC, connection reconfiguration complete message, which may be referred to as "msg3", where the PRACH preamble in this terminology is "msg1" and the RACH response is "msg2". In general, the handover message may denote a completion of connection establishment to the target cell.

On the other hand, in a random access free handover, which may be known as a RACH-less handover, the random access process is omitted, and the UE may directly transmit the handover message, referred to herein as msg3, to the target cell. To enable this, the UE may obtain an uplink grant and a suitable timing advance value of the target cell. Where the source and target cells are synchronous, the UE may obtain the timing advance of the target cell without a random access process by computing the target cell timing advance based on a timing advance of the source cell and a time difference between signals received from the source and target cells. As a specific case, where the source and target cells are physically controlled by equipment at the same site, or where the sites are known to be nearby as in the case of small coverage cells, the timing advance of the source cell may be used as a timing advance of the target cell as well. A handover command sent to a UE from a source cell may comprise an indication of a timing advance adjustment the UE is to apply in connection with the handover.

The UE may obtain the uplink grant for the target cell either in a handover command it receives from the source cell, or directly from the target cell. The handover command message received by the UE from the source cell may include a pre-allocated or periodic uplink grant for accessing the target cell. The pre-allocated or periodic uplink grant may be configured using semi-persistent scheduling, SPS. If a pre-allocated uplink grant is not included in the handover command, the UE may monitor a physical downlink control channel, PDCCH, of the target cell, for example, to receive the uplink grant. In both cases, the uplink grant is dedicated to the UE. Using this uplink grant and the timing advance, the UE may send the handover message, msg3, to the target cell to confirm the handover. The target cell may identify the UE using, for example, a cell-radio network temporary identifier, C-RNTI, medium access control, MAC, control element comprised in msg3.

Where the target cell is a multi-beam cell, it may maintain plural beamforming beams to effect communication with UEs in the cell. The beams may each have a characteristic directionality, in effect increasing overall system capacity. Each beam may be used to transmit a synchronization signal. For example, each beam may carry a specific synchronization signal/physical broadcast channel, PBCH, block, which may be denoted as a SS/PBCH block, for example. An SS/PBCH block may comprise, for example, four orthogonal frequency division multiple access, OFDM, symbols and contain a primary synchronization signal, PSS, as well as a secondary synchronization signal, SSS. Further, the PBCH may carry a master information block, MIB, and a demodulation reference signal, DMRS. The synchronization signals may be sent on the specific beams using beam sweeping, to ensure a sufficient coverage for broadcast and synchronization.

Where a random access process is employed, a UE may select a PRACH preamble associated with a synchronization signal of a beam of the target cell which has a strongest receive strength at the UE. The base station may perform a beam sweep of its receive beams, enabling it to detect PRACH preambles sent by UEs. Responsive to detecting a specific PRACH preamble, the base station may set the receive beam concerned as a transmit beam to send the RACH response back to the UE, where correspondence exists between receive and transmit beams. Thus the random access process in a multi-beam system may be used to set transmit and receive beams for user data and signalling purposes.

In a random access free handover, a target cell may provide the UE, via the handover command provided via the source cell, a pre-allocated uplink grant to send the handover message, msg3, to the target cell. For this pre-allocated uplink grant, the target cell should know how to configure its receive beam to receive the msg3 from the UE successfully. The grant may comprise indications of an interval, starting subframe and a validity period. On the other hand, where the handover command is not used to convey the uplink grant, the target cell should know how to set its transmit beam for transmitting the grant to the UE. In the absence of the PRACH preamble transmission, the target cell does not receive a direct indication concerning which beam the UE can use.

The source cell may configure the UE to measure beams of nearby cells and report results of these measurements to the source cell. Thus the source cell is advised concerning which beams of the target cell the UE can see, optionally also at which signal levels. The source cell may inform the target cell of this, for example in a handover request message, enabling the target cell to consider the beams the UE was able to measure as candidate beams for the random access free handover. In accepting the handover with a handover request acknowledge message, the target cell may select a single beam, for example the one having the strongest downlink received signal measurement, among the beams the UE reported as candidate beams, the source cell then informing the UE of this single beam in the handover command message. The target cell may provide an uplink grant for the single beam to the source cell in the handover request acknowledge message, the source cell then providing this uplink grant to the UE in the handover command message.. In this case, the UE may receive the uplink grant directly from the target cell, via one the beams it reported to the source cell.

In case the target cell does not provide an uplink grant for one of the candidate beams in the handover request acknowledge message, the target cell may transmit the uplink grant using one of the candidate beams in the target cell, for example the one having the strongest downlink received signal measurement. The UE may then receive an uplink grant from one of the candidate beams, which it happens to be able to receive. In this case, the target cell may indicate in the handover request acknowledge message, which beam it will use in delivering the grant.

Random access free handover to a multi-beam cell works best when the strongest reported beam does not change before sending msg3 from the UE. This is so, since the target cell is dependent on the UE measurement before the handover to set its receive beam for receiving the msg3, and/or for setting its transmit beam for providing the uplink grant to the UE. However, in some cases the beam with strongest reported measurement may no longer be strong enough to be detected by the UE due to movement of the UE and/or variations in the propagation channel, such as shadowing. The time which elapses between the sending the measurement report and accessing the target cell may range from 20 to 30 milliseconds, or more. Moreover, as the beams are directional in nature, movement of the UE may cause a significant change in signal strength of any particular beam. This is particularly the case, when the UE moves in a direction perpendicular to the beam or beams.

Furthermore, the reported beam signal strength measurements are subject to measurement errors and fast fading which can lead to an incorrect selection of the strongest beam in the target cell. This may be improved by Layer 3 filtering and/or using Time-to-Trigger, which however delays the measurements, that is, the measurements may already be outdated at the moment of their reporting. As a result of the foregoing, the target cell may fail to receive msg3 from the UE on a pre-allocated uplink grant due to wrong setting of the receive beam at the target cell. Similarly, if a pre-allocated uplink grant is not included in the handover command, the UE may fail to receive from the target cell the uplink grant due to wrong setting of the transmit beam at the target cell.

When the random access free handover is a conditional handover, the risk the candidate beams are not usable is further increased, since the UE will wait until at least one condition associated with the handover is fulfilled before trying to send msg3. Thus the time between the UE measurements of the target cell beams and the use of these beams by the UE increases further. For example, a conditional handover may comprise that the source cell provides at least one condition in the handover command, which the UE will monitor. For example, a condition may comprise that the UE goes ahead with the handover by transmitting msg3 only after a timer set in the handover command expires. Another example is a condition where a geo-location of the UE fulfils a condition, indicating for example the UE is within a coverage area of the target cell. A yet further condition may be that a signal strength of the source cell may have to decline to below a threshold before the UE continues with the handover. A yet even further example of a condition is one where the UE proceeds with the handover responsive to a signal level of the target cell becoming a certain number of decibels stronger than a signal level of the source cell. Conditional handovers are easier for the source cell to schedule since the handover command may be sent in good time before the actual handover, but the risk the radio channel to the target cell changes is increased by the increased delay between the handover command and accessing the target cell.

Based on the foregoing, the following challenges present themselves relating to a random access free handover to a multi-beam target cell: firstly, a dedicated periodic uplink grant for sending msg3 configured in the handover command will be more resource-expensive, since it may block the resources for a potentially long time. Secondly, the target cell may not know exactly when to send an uplink grant to the UE, since it does not precisely know when the UE will be listening for it, due to the timing uncertainties relating to the handover. Thirdly, due to the time elapsing between UE measurement of target cell beams and the use of these beams by the UE, the measured information may be out of date and the selected beam may therefore be incorrect.

To decrease the risk a random access free handover fails, a UE may be configured to use backup resources to establish a connection with the target cell responsive to a determination that none of the candidate beams of the target cell is in fact usable in the handover, for example, in case a signal strength of each of the candidate beams is below a threshold. The threshold may be provided by the system, for example by the target cell in the handover command or via broadcast. Thus the backup resources may be used directly, without waiting for a handover timer to expire. Alternatively, a radio link recovery process may be started early, before handover timer expiry, to hopefully establish a connection with the target cell.

The target cell may provide an uplink grant for each candidate beam to the source cell in the handover request acknowledge message, the source cell then providing this uplink grant to the UE in the handover command message. For example, if pre-allocated/periodic uplink grant is to be provided in the handover command, the target gNB may provide the UE with at least one uplink grant that is associated with one reported beam/ SS/PBCH block. That is, to account for possible changes in the strongest reported SS/PBCH block, the target gNB may provide more than one uplink grant to the UE to send msg3. For instance, if the UE reports the measurements of SS/PBCH block e.g. 1, 2 and 4 (e.g. strongest three measurements), the target gNB can provide a pre-allocated/periodic uplink grant for each of reported SS/PBCH block 1, 2 and 4. In these pre-allocated/periodic uplink grants, the target gNB will set its receive beam to that providing SS/PBCH block 1, 2, 4.

Alternatively, in case the target cell does not provide uplink grants for the candidate beams in the handover request acknowledge message, the target cell may transmit uplink grant using one or more of the candidate beams in the target cell. The UE may then receive an uplink grant from one of the candidate beams, which it is able to receive. In other words, if pre-allocated/periodic uplink grant is not included in the handover command, the target gNB can send at least one PDCCH providing an uplink grant that is associated with at least one of the reported beams / SS/PBCH blocks. That is, to account for possible changes in the strongest reported SS/PBCH block, the target cell/gNB may send PDCCH scheduling an uplink grant for each of SS/PBCH block 1, 2 and 4. In this case, the target gNB needs to indicate to the UE in the handover command the beams / SS/PBCH blocks for which a corresponding an uplink grant would be provided. This is beneficial since the UE may monitor the received signal strengths/qualities of the beams / SS/PBCH blocks that are associated with uplink grant.

The UE may detect that none of the reported beams of the target cell is received with sufficient signal strength and/or quality before sending msg3, for example, their corresponding received signal strengths and/or qualities are below a threshold T that may be configured by the target cell. The threshold may be provided by the target cell either in dedicated RRC signaling, for example in the handover command, or broadcasted, for example in a system information block, SIB.

A first way to use backup resources to establish a connection with the target cell comprises performing a conventional random access procedure using either a contention-based or a contention-free RACH resource. Such a contention-based resource may comprise a preamble, time and frequency resource, for example. Where the resource is contention free, it may comprise either a fallback preamble and uplink grant the UE may use irrespective of a selected beam, or plural beam-specific dedicated RACH resources the UE may use depending on which beam(s) are usable. In other words, when this is done, the UE will perform a random access procedure responsive to a determination the random access free handover cannot be completed using the candidate beam, or candidate beams. An overall handover failure is avoided, since the random access procedure can be used to establish a connection, even if the handover is not as fast as the random access free handover would have been. The target cell may provide information on the RACH resource to be used in the handover request acknowledge message, the source cell then including this information in the handover command it issues to the UE. Thus the target cell may provide information on the backup resource, here the RACH resource, to the UE via the source cell.

A second way to use backup resources to establish a connection with the target cell comprises the UE sending the msg3 message using grant-free contention-based uplink resources. Grant-free access may be provided by the target cell either for beams for which no dedicated uplink grants are configured, or for all beams. In the former case, the UE may use a candidate beam and an associated uplink grant to transmit msg3 where this is possible, and where not the UE would use a non-candidate beam in a grant-free way. In the latter case, the UE would send msg3 on the configured grant-free contention-based resource in general, instead of a dedicated UL grant. In this case, the target cell may decide not to configure any dedicated UL grants at all.

A non-dedicated grant-free access would be advantageous when applying the random access free principle to conditional handovers. Dedicated periodic, SPS, uplink grants and grants via PDCCH become more expensive in terms of radio resources in conditional handovers due to the increased delay. Grant free access on contention-based resources would allow for using the same grant for multiple conditional handover / random access free UEs. This would provide the benefit of reducing resource consumption, at the expense of a moderate collision probability. Thus also in this case, the target cell may provide information on the backup resource, here the configuration of grant-free access, to the UE via the source cell.

In identifying a UE, a MAC control element with a UE identity which is shorter than C-RNTI may be used. For example, if 12 UEs are configured with a same grant-free contention-based resource, a UE identity of 4 bits would be enough, instead of using C-RNTI of 16 bits. As an alternative, the UE may send in addition to msg3 a dedicated reference signal/preamble sequence that is delivered by the target cell.

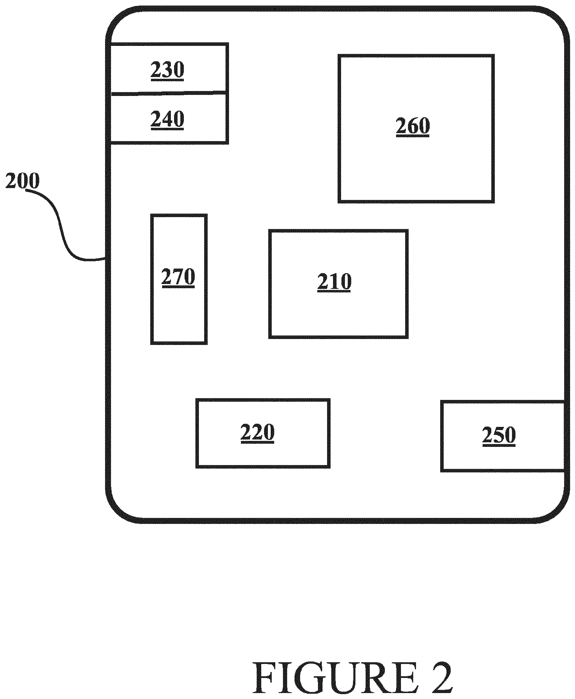

FIGURE 2 illustrates an example apparatus capable of supporting at least some embodiments of the present invention. Illustrated is device 200, which may comprise, for example, a mobile communication device such as UE 110 or, where applicable, a base station of FIGURE 1. Comprised in device 200 is processor 210, which may comprise, for example, a single- or multi-core processor wherein a single-core processor comprises one processing core and a multi-core processor comprises more than one processing core. Processor 210 may comprise, in general, a control device. Processor 210 may comprise more than one processor. Processor 210 may be a control device. A processing core may comprise, for example, a Cortex-A8 processing core manufactured by ARM Holdings or a Steamroller processing core produced by Advanced Micro Devices Corporation. Processor 210 may comprise at least one Qualcomm Snapdragon and/or Intel Atom processor. Processor 210 may comprise at least one application-specific integrated circuit, ASIC. Processor 210 may comprise at least one field-programmable gate array, FPGA. Processor 210 may be means for performing method steps in device 200. Processor 210 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a UE or base station, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 200 may comprise memory 220. Memory 220 may comprise random-access memory and/or permanent memory. Memory 220 may comprise at least one RAM chip. Memory 220 may comprise solid-state, magnetic, optical and/or holographic memory, for example. Memory 220 may be at least in part accessible to processor 210. Memory 220 may be at least in part comprised in processor 210. Memory 220 may be means for storing information. Memory 220 may comprise computer instructions that processor 210 is configured to execute. When computer instructions configured to cause processor 210 to perform certain actions are stored in memory 220, and device 200 overall is configured to run under the direction of processor 210 using computer instructions from memory 220, processor 210 and/or its at least one processing core may be considered to be configured to perform said certain actions. Memory 220 may be at least in part comprised in processor 210. Memory 220 may be at least in part external to device 200 but accessible to device 200.

Device 200 may comprise a transmitter 230. Device 200 may comprise a receiver 240. Transmitter 230 and receiver 240 may be configured to transmit and receive, respectively, information in accordance with at least one cellular or non-cellular standard. Transmitter 230 may comprise more than one transmitter. Receiver 240 may comprise more than one receiver. Transmitter 230 and/or receiver 240 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 200 may comprise a near-field communication, NFC, transceiver 250. NFC transceiver 250 may support at least one NFC technology, such as NFC, Bluetooth, Wibree or similar technologies.

Device 200 may comprise user interface, UI, 260. UI 260 may comprise at least one of a display, a keyboard, a touchscreen, a vibrator arranged to signal to a user by causing device 200 to vibrate, a speaker and a microphone. A user may be able to operate device 200 via UI 260, for example to accept incoming telephone calls, to originate telephone calls or video calls, to browse the Internet, to manage digital files stored in memory 220 or on a cloud accessible via transmitter 230 and receiver 240, or via NFC transceiver 250, and/or to play games.

Device 200 may comprise or be arranged to accept a user identity module 270. User identity module 270 may comprise, for example, a subscriber identity module, SIM, card installable in device 200. A user identity module 270 may comprise information identifying a subscription of a user of device 200. A user identity module 270 may comprise cryptographic information usable to verify the identity of a user of device 200 and/or to facilitate encryption of communicated information and billing of the user of device 200 for communication effected via device 200.

Processor 210 may be furnished with a transmitter arranged to output information from processor 210, via electrical leads internal to device 200, to other devices comprised in device 200. Such a transmitter may comprise a serial bus transmitter arranged to, for example, output information via at least one electrical lead to memory 220 for storage therein. Alternatively to a serial bus, the transmitter may comprise a parallel bus transmitter. Likewise processor 210 may comprise a receiver arranged to receive information in processor 210, via electrical leads internal to device 200, from other devices comprised in device 200. Such a receiver may comprise a serial bus receiver arranged to, for example, receive information via at least one electrical lead from receiver 240 for processing in processor 210. Alternatively to a serial bus, the receiver may comprise a parallel bus receiver.

Device 200 may comprise further devices not illustrated in FIGURE 2. For example, where device 200 comprises a smartphone, it may comprise at least one digital camera. Some devices 200 may comprise a back-facing camera and a front-facing camera, wherein the back-facing camera may be intended for digital photography and the front-facing camera for video telephony. Device 200 may comprise a fingerprint sensor arranged to authenticate, at least in part, a user of device 200. In some embodiments, device 200 lacks at least one device described above. For example, some devices 200 may lack a NFC transceiver 250 and/or user identity module 270.

Processor 210, memory 220, transmitter 230, receiver 240, NFC transceiver 250, UI 260 and/or user identity module 270 may be interconnected by electrical leads internal to device 200 in a multitude of different ways. For example, each of the aforementioned devices may be separately connected to a master bus internal to device 200, to allow for the devices to exchange information. However, as the skilled person will appreciate, this is only one example and depending on the embodiment various ways of interconnecting at least two of the aforementioned devices may be selected without departing from the scope of the present invention.

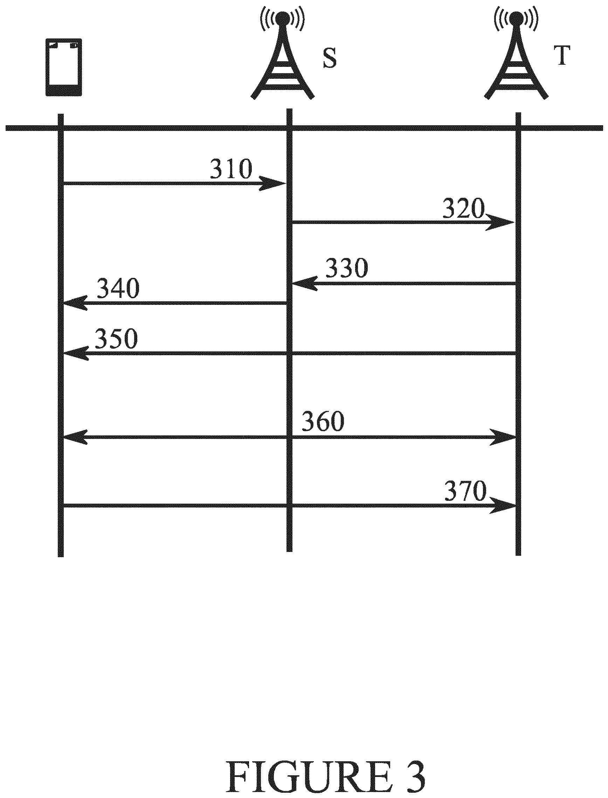

FIGURE 3 illustrates signalling in accordance with at least some embodiments of the present invention. On the vertical axes are disposed, on the left, UE 110 of FIGURE 1, in the centre, source cell S and on the right, target cell T. Time advances from the top toward the bottom.

In phase 310, the UE provides its measurement report to the source cell, the report identifying a beam or beams of the target cell that has a strong received signal strength or quality in the UE. The source cell decides to hand over the UE to the target cell, using any suitable handover determination logic. In phase 320, the source cell provides to the target cell a handover request, wherein the beam(s) identified by the UE as the strongest is identified.

The target cell responds in phase 330 with a handover request acknowledge, and in phase 340 the source cell issues a handover command to the UE. The target cell may inform the source cell of a backup RACH resource in phase 330, and the source cell includes this information in the handover command of phase 340. The handover command may comprise an uplink grant or grants associated with the beam or beams identified as strongest in the report of phase 310. The grant(s) is received in the source cell in phase 330 from the target cell.

In phase 350, the target cell sets at least one receive beam in accordance with the one or ones measured by the UE as having the strong received signal quality or strength. However, it may be that at the point of the handover the UE cannot anymore detect any of these beams with a sufficient signal level to consider using one of them in transmitting the handover message, msg3. In response, the UE performs the random access procedure with the target cell, phase 360. As a result of the random access process, the receive beam of the target cell can be set to enable communication with the UE, and the UE transmits its msg3 to the target cell in phase 370.

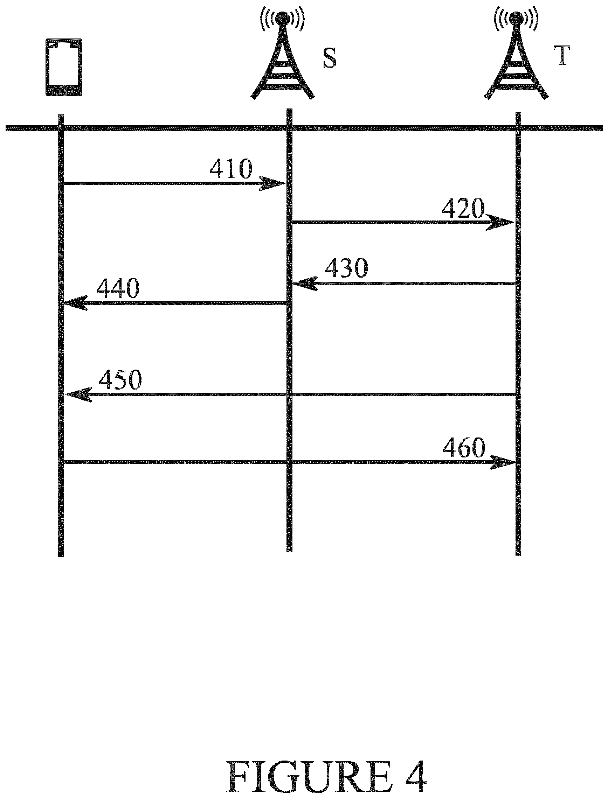

FIGURE 4 illustrates signalling in accordance with at least some embodiments of the present invention. On the vertical axes are disposed, on the left, UE 110 of FIGURE 1, in the centre, source cell S and on the right, target cell T. Time advances from the top toward the bottom.

In FIGURE 4, phases 410, 420, 430, 440 and 450 correspond to phases 310, 320, 330, 340 and 350 of FIGURE 3, respectively, with the exception that in phases 430 and 440, the source cell and UE are informed of a backup resource which in the case of FIGURE 4 comprises a grant-free uplink resource(s). Responsive to determining the none of the candidate beams is usable for transmission of the msg3 to the target cell, the UE in phase 460 transmits msg3 to the target cell using the grant-free uplink resource.

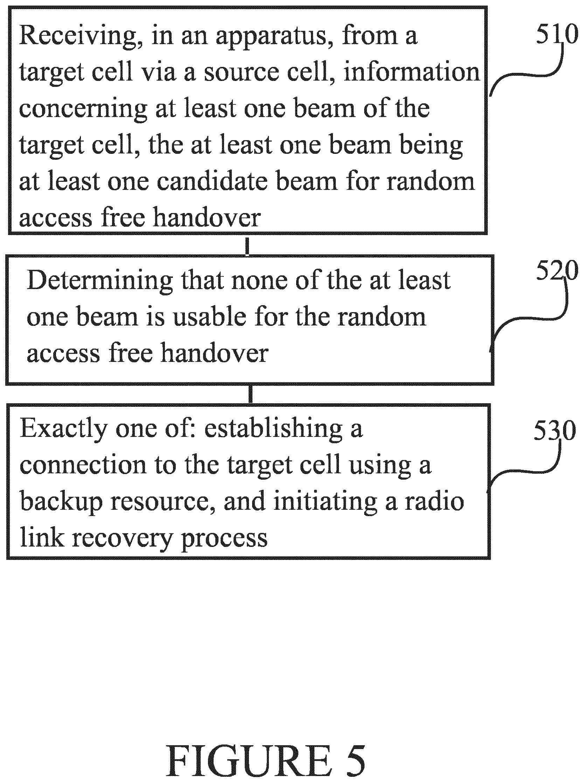

FIGURE 5 is a flow graph of a method in accordance with an aspect useful for understanding the present invention.

The phases of the illustrated method may be performed in UE 110, or in a control device configured to control the functioning thereof, when installed therein. Phase 510 comprises receiving, in an apparatus, from a target cell via a source cell, information concerning at least one beam of the target cell, the at least one beam being at least one candidate beam for random access free handover. The information concerning the at least one beam may comprise a beam identity, an uplink grant relating to the beam and/or information on backup resources usable in case the beam cannot be used for random access free handover, for example. Phase 520 comprises determining that none of the at least one beam is usable for the random access free handover. Finally, phase 530 comprises exactly one of establishing a connection to the target cell using a backup resource, and initiating a radio link recovery process.

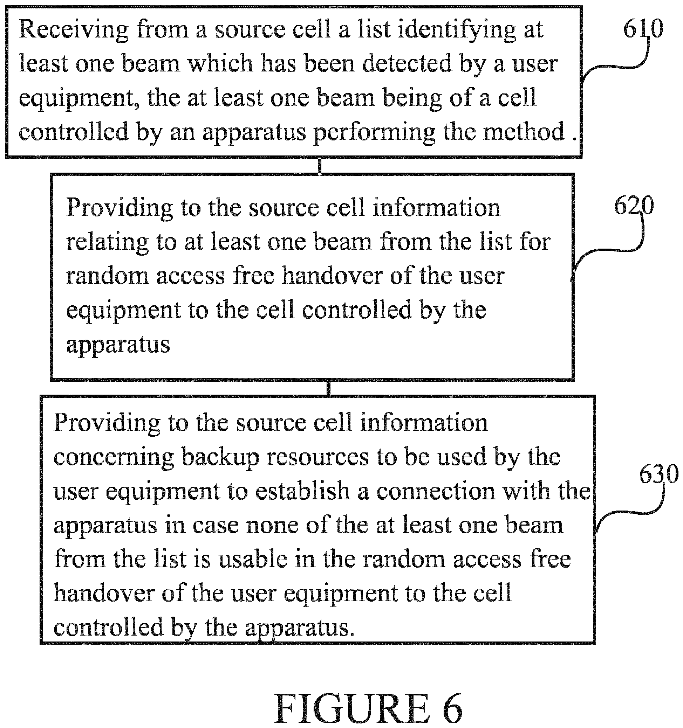

FIGURE 6 is a flow graph of a method in accordance with an aspect useful for understanding the present invention. The phases of the illustrated method may be performed in a base station, or in a control device configured to control the functioning thereof, when installed therein.

Phase 610 comprises receiving from a source cell a list identifying at least one beam which has been detected by a user equipment , the at least one beam being of a cell controlled by an apparatus performing the method. Phase 620 comprises providing to the source cell information relating to at least one beam from the list for random access free handover of the user equipment to the cell controlled by the apparatus. The information relating to the at least one beam may comprise a beam identity and an uplink grant relating to the beam for random access free handover, for example.. Phase 630 comprises providing to the source cell information concerning backup resources to be used by the user equipment to establish a connection with the apparatus in case none of the at least one beam from the list is usable in the random access free handover of the user equipment to the cell controlled by the apparatus. For example, the information concerning backup resources may comprise at least one of the following: information on a contention-based random access resource, information on a contention-free random access resource and information on a grant-free contention based uplink resource other than a random access resource.

It should be appreciated that future networks may utilize network functions virtualization, NFV, which is a network architecture concept that proposes virtualizing network node functions into "building blocks" or entities that may be operationally connected or linked together to provide services. A virtualized network function, VNF, may comprise one or more virtual machines running computer program codes using standard or general type servers instead of customized hardware. Cloud computing or data storage may also be utilized. In radio communications, this may mean operations to be carried out, at least partly, in a central/centralized unit, CU, (for example a server, host or node) operationally coupled to distributed unit, DU, (for example a radio head/node). It is also possible that node operations will be distributed among a plurality of servers, nodes or hosts. It should also be understood that the distribution of labour between core network operations and radio access node operations may vary depending on implementation. In an embodiment, the server may generate a virtual network through which the server communicates with the radio node / radio access node. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU and the boundary where the responsibility is shifted between the CU and the DU may be selected according to implementation.

Therefore, in an embodiment, a CU-DU architecture is implemented. In such case the apparatus/device of Figure 2 may be comprised in a central unit (for example a control unit, an edge cloud server, a server) operatively coupled (for example via a wireless or wired network) to a distributed unit (for example, a remote radio head/node). That is, the central unit (for example an edge cloud server) and the radio access node may be stand-alone apparatuses communicating with each other via a radio path or via a wired connection. Alternatively, they may be located in a same entity communicating via a wired connection, etc. It should be understood that the edge cloud or edge cloud server may serve a plurality of radio nodes or a radio access networks. In an embodiment, at least some of the described processes may be performed by the central unit. In another embodiment, the apparatus may be instead comprised in the distributed unit, and at least some of the described processes may be performed by the distributed unit.

In an embodiment, the execution of at least some of the functionalities of the apparatus may be shared between two physically separate devices (DU and CU) forming one operational entity. Therefore, the apparatus may be seen to depict the operational entity comprising one or more physically separate devices for executing at least some of the described processes. In an embodiment, such CU-DU architecture may provide flexible distribution of operations between the CU and the DU. In practice, any digital signal processing task may be performed in either the CU or the DU and the boundary where the responsibility is shifted between the CU and the DU may be selected according to implementation. In an embodiment, the apparatus controls the execution of the processes, regardless of the location of the apparatus and regardless of where the processes/functions are carried out.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in managing mobility in communication networks.

## Claims

1. An apparatus for a user equipment, the apparatus comprising means for:
receiving (510), from a target cell via a source cell, information concerning at least one beam of the target cell, the at least one beam being at least one candidate beam for random access free handover and the information comprising at least one uplink grant dedicated to the user equipment and associated with the at least one beam;
receiving information concerning a backup resource from the target cell via the source cell;
determining (520) that none of the at least one beam is usable for the random access free handover, and
establishing (530) a connection to the target cell using the backup resource, wherein the backup resource comprises one of a contention-based random access resource for a contention-based random access process, contention-free random access resource for a contention-free random access process and a grant-free contention-based uplink resource for transmitting a handover complete message without performing a random access process.

2. The apparatus according to claim 1, further comprising means for establishing the connection using the backup resource by a random access process, wherein the backup resource comprises a random access resource.

3. The apparatus according to claim 2, wherein the backup random access resource comprises the contention-based random access resource.

4. The apparatus according to claim 2 or 3, wherein the backup random access resource comprises the contention-free random access resource.

5. The apparatus according to claim 1, further comprising means for establishing the connection using the backup resource by transmitting a handover complete message without performing a random access process, wherein the backup resource comprises the grant-free contention-based uplink resource.

6. The apparatus according to any of claims 1 - 5, further comprising means for providing a report to the source cell, the report identifying the at least one beam of the target cell as suitable for communication with the apparatus.

7. The apparatus according to any of claims 1 - 6, wherein the random access free handover comprises a handover wherein the apparatus does not transmit a physical random access preamble to the target cell.

8. The apparatus according to any of claims 1 - 7, further comprising means for receiving from the source cell an indication of an uplink grant for at least one from among the at least one beam of the target cell.

9. The apparatus according to any of claims 1 - 7, further comprising means for receiving from the source cell an indication that at least one uplink grant for the random access free handover is going to be delivered to the apparatus over at least one beam from among the at least one beam of the target cell.

10. The apparatus according to any of claims 1 - 9, wherein the random access free handover comprises a conditional handover.

11. The apparatus according to any of claims 1 - 10, further comprising means for determining that none of the at least one beam is usable for the random access free handover by comparing a signal strength or signal quality parameter of each of the at least one beam to a threshold.

12. A method performed by an apparatus for a user equipment, the method comprising:
receiving (510) from a target cell via a source cell, information concerning at least one beam of the target cell, the at least one beam being at least one candidate beam for random access free handover and the information comprising at least one uplink grant dedicated to the user equipment and associated with the at least one beam;
receiving information concerning a backup resource from the target cell via the source cell;
determining (520) that none of the at least one beam is usable for the random access free handover, and
establishing (530) a connection to the target cell using the backup resource, wherein the backup resource comprises one of a contention-based random access resource for a contention-based random access process, contention-free random access resource for a contention-free random access process and a grant-free contention-based uplink resource for transmitting a handover complete message without performing a random access process.

13. An apparatus for a network node of a target cell, the apparatus comprising means for:
receiving (610) from a source cell a list identifying at least one beam which has been detected by a user equipment, the at least one beam being of a cell controlled by the apparatus, **characterized in that** the means are further configured for
providing (620) to the source cell information relating to at least one beam from the list for random access free handover of the user equipment to the cell controlled by the apparatus, wherein the information comprises at least one uplink grant dedicated to the user equipment and associated with the at least one beam; and
providing (630) to the source cell information concerning backup resources to be used by the user equipment to establish a connection with the apparatus in case none of the at least one beam from the list is usable in the random access free handover of the user equipment to the cell controlled by the apparatus, wherein the backup resources comprises one of a contention-based random access resource for a contention-based random access process, contention-free random access resource for a contention-free random access process and a grant-free contention-based uplink resource for transmitting a handover complete message without performing a random access process.

14. The apparatus according to claim 13, wherein the information relating to at least one beam from the list for random access free handover comprises a beam identity and an uplink grant relating to the beam for the random access free handover.

## Patentansprüche

1. Vorrichtung für ein Endgerät, wobei die Vorrichtung Mittel umfasst zum:
Empfangen (510), von einer Zielzelle über eine Quellzelle, von Informationen, die mindestens einen Strahl der Zielzelle betreffen, wobei der mindestens eine Strahl mindestens ein Kandidatenstrahl für ein direktzugriffsfreies (engl. Random Access Free) Handover ist und die Informationen mindestens eine Uplink-Gewährung umfassen, die für das Endgerät bestimmt und mit dem mindestens einen Strahl verbunden ist;
Empfangen von Informationen bezüglich einer Backup-Ressource von der Zielzelle über die Quellzelle;
Bestimmen (520), dass keiner des mindestens einen Strahls für das direktzugriffsfreie Handover verwendbar ist, und
Herstellen (530) einer Verbindung mit der Zielzelle unter Verwendung der Backup-Ressource, wobei die Backup-Ressource entweder eine konfliktbasierten Direktzugriffsressource für einen konfliktbasierten Direktzugriffsprozess, eine konfliktfreie Direktzugriffsressource für einen konfliktfreien Direktzugriffsprozess oder eine gewährungsfreie konfliktbasierte Uplink-Ressource zum Übertragen einer Nachricht zu dem abgeschlossenen Handover, ohne einen Direktzugriffsprozess durchzuführen, ist.

2. Vorrichtung nach Anspruch 1, die weiter Mittel zum Herstellen der Verbindung unter Verwendung der Backup-Ressource durch einen Direktzugriffsprozess umfasst, wobei die Backup-Ressource eine Direktzugriffsressource umfasst.

3. Vorrichtung nach Anspruch 2, wobei die Backup-Direktzugriffsressource die konfliktbasierte Direktzugriffsressource umfasst.

4. Vorrichtung nach Anspruch 2 oder 3, wobei die Backup-Direktzugriffsressource die konfliktfreie Direktzugriffsressource umfasst.

5. Vorrichtung nach Anspruch 1, die weiter Mittel zum Herstellen der Verbindung unter Verwendung der Backup-Ressource durch das Übertragen einer Nachricht zu dem abgeschlossenen Handover, ohne einen Direktzugriffsprozess durchzuführen, umfasst, wobei die Backup-Ressource die gewährungsfreie konfliktbasierte Uplink-Ressource umfasst.

6. Vorrichtung nach einem der Ansprüche 1 bis 5, die weiter Mittel zum Bereitstellen eines Berichts an die Quellzelle umfasst, wobei der Bericht den mindestens einen Strahl der Zielzelle als für die Kommunikation mit der Vorrichtung geeignet identifiziert.

7. Vorrichtung nach einem der Ansprüche 1 bis 6, wobei das direktzugriffsfreie Handover ein Handover umfasst, bei dem die Vorrichtung keine physische Direktzugriffspräambel an die Zielzelle überträgt.

8. Vorrichtung nach einem der Ansprüche 1 bis 7, die weiter Mittel zum Empfangen, von der Quellzelle, einer Angabe einer Uplink-Gewährung für mindestens einen von dem mindestens einen Strahl der Zielzelle umfasst.

9. Vorrichtung nach einem der Ansprüche 1 bis 7, die weiter Mittel zum Empfangen, von der Quellzelle, einer Angabe, dass mindestens eine Uplink-Gewährung für das direktzugriffsfreie Handover über mindestens einen Strahl von dem mindestens einen Strahl der Zielzelle an die Vorrichtung geliefert wird.

10. Vorrichtung nach einem der Ansprüche 1 bis 9, wobei das direktzugriffsfreie Handover ein bedingtes Handover umfasst.

11. Vorrichtung nach einem der Ansprüche 1 bis 10, die weiter Mittel zum Bestimmen, dass keiner des mindestens einen Strahls für das direktzugriffsfreie Handover verwendbar ist, umfasst durch Vergleichen eines Signalstärke- oder Signalqualitätsparameters jedes des mindestens einen Strahls mit einem Schwellenwert.

12. Verfahren, das von einer Vorrichtung für ein Endgerät durchgeführt wird, wobei das Verfahren umfasst:
Empfangen (510), von einer Zielzelle über eine Quellzelle, von Informationen, die mindestens einen Strahl der Zielzelle betreffen, wobei der mindestens eine Strahl mindestens ein Kandidatenstrahl für ein direktzugriffsfreies Handover ist und die Informationen mindestens eine Uplink-Gewährung umfassen, die für das Endgerät bestimmt und mit dem mindestens einen Strahl verbunden ist;
Empfangen von Informationen bezüglich einer Backup-Ressource von der Zielzelle über die Quellzelle;
Bestimmen (520), dass keiner des mindestens einen Strahls für das direktzugriffsfreie Handover verwendbar ist, und
Herstellen (530) einer Verbindung mit der Zielzelle unter Verwendung der Backup-Ressource, wobei die Backup-Ressource entweder eine konfliktbasierte Direktzugriffsressource für einen konfliktbasierten Direktzugriffsprozess, eine konfliktfreie Direktzugriffsressource für einen konfliktfreien Direktzugriffsprozess oder eine gewährungsfreie konfliktbasierte Uplink-Ressource zum Übertragen einer Nachricht zu dem abgeschlossenen Handover, ohne einen Direktzugriffsprozess durchzuführen, ist.

13. Vorrichtung für einen Netzwerkknoten einer Zielzelle, wobei die Vorrichtung Mittel umfasst zum:
Empfangen (610), von einer Quellzelle, einer Liste, die mindestens einen Strahl identifiziert, der von einem Endgerät erfasst wurde, wobei der mindestens eine Strahl von einer Zelle stammt, die von der Vorrichtung gesteuert wird,
**dadurch gekennzeichnet, dass** die Mittel weiter konfiguriert sind zum
Bereitstellen (620), für die Quellzelle, von Informationen bezüglich mindestens eines Strahls aus der Liste für ein direktzugriffsfreies Handover des Endgeräts zu der von der Vorrichtung gesteuerten Zelle, wobei die Informationen mindestens eine Uplink-Gewährung umfassen, die für das Endgerät bestimmt und mit dem mindestens einen Strahl verbunden ist; und
Bereitstellen (630), für die Quellzelle, von Informationen bezüglich Backup-Ressourcen, die von dem Endgerät zu verwenden sind, um eine Verbindung mit der Vorrichtung herzustellen, falls keiner des mindestens einen Strahls aus der Liste in dem direktzugriffsfreien Handover des Endgeräts zu der durch die Vorrichtung gesteuerte Zelle verwendbar ist, wobei die Backup-Ressourcen entweder eine konfliktbasierte Direktzugriffsressource für einen konfliktbasierten Direktzugriffsprozess, eine konfliktfreie Direktzugriffsressource für einen konfliktfreien Direktzugriffsprozess oder eine gewährungsfreie konfliktbasierte Uplink-Ressource zum Übertragen einer Nachricht zu dem abgeschlossenen Handover, ohne einen Direktzugriffsprozess durchzuführen, umfassen.

14. Vorrichtung nach Anspruch 13, wobei die Informationen bezüglich mindestens eines Strahls aus der Liste für das direktzugriffsfreie Handover eine Strahlidentität und eine Uplink-Gewährung bezüglich des Strahls für das direktzugriffsfreie Handover umfassen.

## Revendications

1. Appareil pour un équipement utilisateur, l'appareil comprenant des moyens pour :
recevoir (510), à partir d'une cellule cible via une cellule source, des informations concernant un ou plusieurs faisceaux de la cellule cible, les un ou plusieurs faisceaux étant un ou plusieurs faisceaux candidats pour un transfert libre d'accès aléatoire, et les informations comprenant un ou plusieurs octrois de liaison montante dédiés à l'équipement utilisateur et associés aux un ou plusieurs faisceaux ;
recevoir des informations concernant une ressource de sauvegarde à partir de la cellule cible via la cellule source ;
déterminer (520) qu'aucun des un ou plusieurs faisceaux n'est utilisable pour le transfert libre d'accès aléatoire, et
établir (530) une connexion à la cellule cible en utilisant la ressource de sauvegarde, dans lequel la ressource de sauvegarde comprend l'une parmi une ressource d'accès aléatoire basée sur la contention pour un processus d'accès aléatoire basé sur la contention, une ressource d'accès aléatoire sans contention pour un processus d'accès aléatoire sans contention et une ressource de liaison montante basée sur la contention sans octroi pour transmettre un message de transfert complet sans réaliser de processus d'accès aléatoire.

2. Appareil selon la revendication 1, comprenant en outre des moyens pour établir la connexion en utilisant la ressource de sauvegarde par un processus d'accès aléatoire, dans lequel la ressource de sauvegarde comprend une ressource d'accès aléatoire.

3. Appareil selon la revendication 2, dans lequel la ressource d'accès aléatoire de sauvegarde comprend la ressource d'accès aléatoire basée sur la contention.

4. Appareil selon la revendication 2 ou 3, dans lequel la ressource d'accès aléatoire de sauvegarde comprend la ressource d'accès aléatoire sans contention.

5. Appareil selon la revendication 1, comprenant en outre des moyens pour établir la connexion en utilisant la ressource de sauvegarde en transmettant un message de transfert complet sans réaliser de processus d'accès aléatoire, dans lequel la ressource de sauvegarde comprend la ressource de liaison montante basée sur la contention sans octroi.

6. Appareil selon l'une quelconque des revendications 1 à 5, comprenant en outre des moyens pour fournir un rapport à la cellule source, le rapport identifiant les un ou plusieurs faisceaux de la cellule cible comme convenant pour une communication avec l'appareil.

7. Appareil selon l'une quelconque des revendications 1 à 6, dans lequel le transfert libre d'accès aléatoire comprend un transfert dans lequel l'appareil ne transmet pas de préambule d'accès aléatoire physique à la cellule cible.

8. Appareil selon l'une quelconque des revendications 1 à 7, comprenant en outre des moyens pour recevoir, à partir de la cellule source, une indication d'un octroi de liaison montante pour au moins un faisceau parmi les un ou plusieurs faisceaux de la cellule cible.

9. Appareil selon l'une quelconque des revendications 1 à 7, comprenant en outre des moyens pour recevoir, à partir de la cellule source, une indication qu'un ou plusieurs octrois de liaison montante pour le transfert libre d'accès aléatoire vont être délivrés à l'appareil sur un ou plusieurs faisceaux parmi les un ou plusieurs faisceaux de la cellule cible.

10. Appareil selon l'une quelconque des revendications 1 à 9, dans lequel le transfert libre d'accès aléatoire comprend un transfert conditionnel.

11. Appareil selon l'une quelconque des revendications 1 à 10, comprenant en outre des moyens pour déterminer qu'aucun des un ou plusieurs faisceaux n'est utilisable pour le transfert libre d'accès aléatoire en comparant un paramètre d'intensité de signal ou de qualité de signal de chacun des un ou plusieurs faisceaux à un seuil.

12. Procédé réalisé par un appareil pour un équipement utilisateur, le procédé comprenant :
la réception (510), à partir d'une cellule cible via une cellule source, d'informations concernant un ou plusieurs faisceaux de la cellule cible, les un ou plusieurs faisceaux étant un ou plusieurs faisceaux candidats pour un transfert libre d'accès aléatoire, et les informations comprenant un ou plusieurs octrois de liaison montante dédiés à l'équipement utilisateur et associés aux un ou plusieurs faisceaux ;
la réception d'informations concernant une ressource de sauvegarde à partir de la cellule cible via la cellule source ;
la détermination (520) qu'aucun des un ou plusieurs faisceaux n'est utilisable pour le transfert libre d'accès aléatoire, et
l'établissement (530) d'une connexion à la cellule cible en utilisant la ressource de sauvegarde, dans lequel la ressource de sauvegarde comprend l'une parmi une ressource d'accès aléatoire basée sur la contention pour un processus d'accès aléatoire basé sur la contention, une ressource d'accès aléatoire sans contention pour un processus d'accès aléatoire sans contention et une ressource de liaison montante basée sur la contention sans octroi pour transmettre un message de transfert complet sans réaliser de processus d'accès aléatoire.

13. Appareil pour un nœud de réseau d'une cellule cible, l'appareil comprenant des moyens pour :
recevoir (610), à partir d'une cellule source, une liste identifiant un ou plusieurs faisceaux qui ont été détectés par un équipement utilisateur, les un ou plusieurs faisceaux étant ceux d'une cellule commandée par l'appareil,
**caractérisé en ce que** les moyens sont en outre configurés pour
fournir (620) à la cellule source des informations relatives à un ou plusieurs faisceaux de la liste pour un transfert libre d'accès aléatoire de l'équipement utilisateur vers la cellule commandée par l'appareil, dans lequel les informations comprennent un ou plusieurs octrois de liaison montante dédiés à l'équipement utilisateur et associés aux un ou plusieurs faisceaux ; et
fournir (630) à la cellule source des informations concernant des ressources de sauvegarde à utiliser par l'équipement utilisateur pour établir une connexion avec l'appareil dans le cas où aucun des un ou plusieurs faisceaux de la liste n'est utilisable dans le transfert libre d'accès aléatoire de l'équipement utilisateur vers la cellule commandée par l'appareil, dans lequel les ressources de sauvegarde comprennent l'une parmi une ressource d'accès aléatoire basée sur la contention pour un processus d'accès aléatoire basé sur la contention, une ressource d'accès aléatoire sans contention pour un processus d'accès aléatoire sans contention et une ressource de liaison montante basée sur la contention sans octroi pour transmettre un message de transfert complet sans réaliser de processus d'accès aléatoire.

14. Appareil selon la revendication 13, dans lequel les informations relatives à un ou plusieurs faisceaux de la liste pour un transfert libre d'accès aléatoire comprennent une identité de faisceau et un octroi de liaison montante relatif au faisceau pour le transfert libre d'accès aléatoire.
